**Europäisches Patentamt**

**European Patent Office**

**Office européen des brevets**

(19)

(11) Publication number: **0 048 518**
**A1**

(12) # EUROPEAN PATENT APPLICATION

(21) Application number: **81201028.8**

(22) Date of filing: **14.09.81**

(51) Int. Cl.³: **F 24 D 3/08**
**F 24 D 3/00**

(30) Priority: **18.09.80 NL 8005223**

(43) Date of publication of application:
**31.03.82 Bulletin 82/13**

(84) Designated Contracting States:
**BE DE FR GB NL SE**

(71) Applicant: **AWB Apparatenfabriek Warmtebouw B.V.**
**P.O. Box**
**NL-5740 AA Beek en Donk(NL)**

(72) Inventor: **Siebelt, Dirk Bernardus Lambertus**
**No.13, Korhoenhof**
**NL-5672 VG Nuenen(NL)**

(74) Representative: **Konings, Lucien Marie Cornelis**
**Joseph et al,**
**OCTROOIBUREAU ARNOLD & SIEDSMA Sweelinckplein**
**1**
**NL-2517 GK Den Haag(NL)**

(54) **A district or block heating system.**

(57) A district or block heating system, in which each individual dwelling heat consuming installation connected directly or through a heat exchanger (4) to a ring main (1,2), in which a hot fluid is circulated, is so constructed as to make the heating of either only radiators (13) for space heating, or only a tap-water heating device (16-18), or the series connection of the tap-water heating device (16-18) and the radiators (13), or the tap-water heating device (16-18) in parallel with said series connection directly or indirectly possible and to control the current of said fluid through each individual installation by the required quantity of heat there in.

FIG.1

The invention relates to a district or block heating system comprising a ring main which is connected to a source of heat and in which a heating fluid is circulated, a plurality of individual composite heat consuming installations intended for space heating and tap-water heating, said heat consuming installations being either directly connected to said ring main or being thermally coupled therewith through a heat exchanger, and in at least one of said installations a remote controlled threeway cock which is adapted to connect either the space heating appliances or the primary space of a heat exchanger of a device for heating tap-water directly to said ring main or the secondary space of the first mentioned heat exchanger.

The known heat consuming installations forming part of these heating systems have been so constructed as to cut off the space heating systems from the supply of heat when hot water is tapped. This has the disadvantage that, when during a long time much hot water for baths, showers, washing and other purposes is used, the space heating appliances are cut off from the supply of heating fluid for such a long time that during said time the installation is not able to meet the requirements of space heating.

The invention has the object to provide a district or block heating system of the kind described here above which misses the mentioned disadvantage of the known systems. This is achieved in that in the said heat consuming installation the outlet end of the primary space of the heat exchanger of the tap-water heating device can be connected both directly and through the space heating appliances to a return conduit connected to said ring main or to the secondary space of the first mentioned heat exchanger and means for regulating by the heat consumption the current of the heating fluid flowing, respectively, through the installation or through the primary circuit thereof are provided.

Consequently, in this installation the return fluid (usually water) of the tap-water heating device can be led through the space heating appliances (usually the radiators of a central heating system) and feed these appliances with residual heat, whilst hot tap-water is used. The reulating means see to it that the current of heating fluid through the series connection of the tap-water heating device and the space heating appliances is adapted to the heat requirements of the two different heating apparatus.

The heating system according to the invention may be so constructed, as to make it possible that the space heating appliances are connected with their inlet ends both to an outlet port of the threeway cock and to the outlet end of the primary space of the heat exchanger of the tap-water heating device, as well as through a shunting conduit comprising a stop cock to a return conduit which is connected to the ring main or to the secondary space of the first mentioned heat exchanger and with their outlet ends to said return conduit and the primary space of the heat exchanger of the tap-water heating device is connected with its inlet end to the other outlet port of the threeway cock and with its outlet end both to the inlet ends of the space heating appliances and through said shunting conduit comprising the stop cock to said return conduit. Should in this system heat be required only for the tap-water, the stop cock provided in the shunting conduit will be opened, so that the space heating appliances are short-circuited. However, should heat be required only for the space heating appliances or both for these appliances and the tap-water heating device, this stop cock will be closed.

Advantageously, the threeway cock may be a controllable gradually reversible reversing valve which is so constructed, as to enable either only its one outlet port or only its other outlet port or both its one outlet port through an opening with adjustable passage area and its other outlet port through an opening with complementary passage area to be brought into communication with the inlet port of said cock. In that case the space heating appliances and the tap-water heating devices can be fed with heating fluid either individually or in parallel as well as in series and it is possible to distribute the offered heat in a favourable way among said appliances and said device.

A favourable variant of the heating system constructed in accordance with the invention is obtained, if the space heating appliances are connected with their inlet ends both to an outlet port of the threeway cock and through a conduit provided with a check valve opening towards said inlet ends to the outlet end of the primary space of the heat exchanger of the tap-water heating device and with their outlet ends through a controllable second threeway cock to a return conduit connected to the ring main or to the secondary space of the first mentioned heat exchanger and if the primary space of the heat exchanger of the tap-water heating device is connected with its inlet end to the other outlet port of the first threeway cock and with its outlet end both through a conduit provided with a check valve closing towards its outlet end to the inlet ends of the space heating appliances and through the controllable second threeway cock with said return conduit and furthermore if the second threeway cock is constructed as a controllable gradually reversible reversing valve and is adapted to connect either only the space heating appliances, or only the primary space of the heat exchanger of the tap-water heating device, or both said appliances through an opening with adjustable passage area and the primary space of the last mentioned heat exchanger through an opening with complementary passage area to said return conduit. Also in this system it is possible to insert either only the space heating appliances, or only the heat exchanger of the tap-water heating device, or the series connection of said appliances and said heat exchanger, or the series connection of said heat exchanger and the space heating appliances shunted by a conduit with restricted passage area into the heating circuit, whereby favourable stability of the space heating is obtained.

The invention will be elucidated with the aid of the drawings. In the drawings:

Fig.1 is a diagram of a first embodiment of a heat consuming installation of a district or block heating system constructed in accordance with the invention;

Fig.2 is a diagram of a variant of a part of the embodiment shown in fig.1 and

Fig.3 is a diagram of a second embodiment of a heat consuming installation forming part of a district or block heating system.

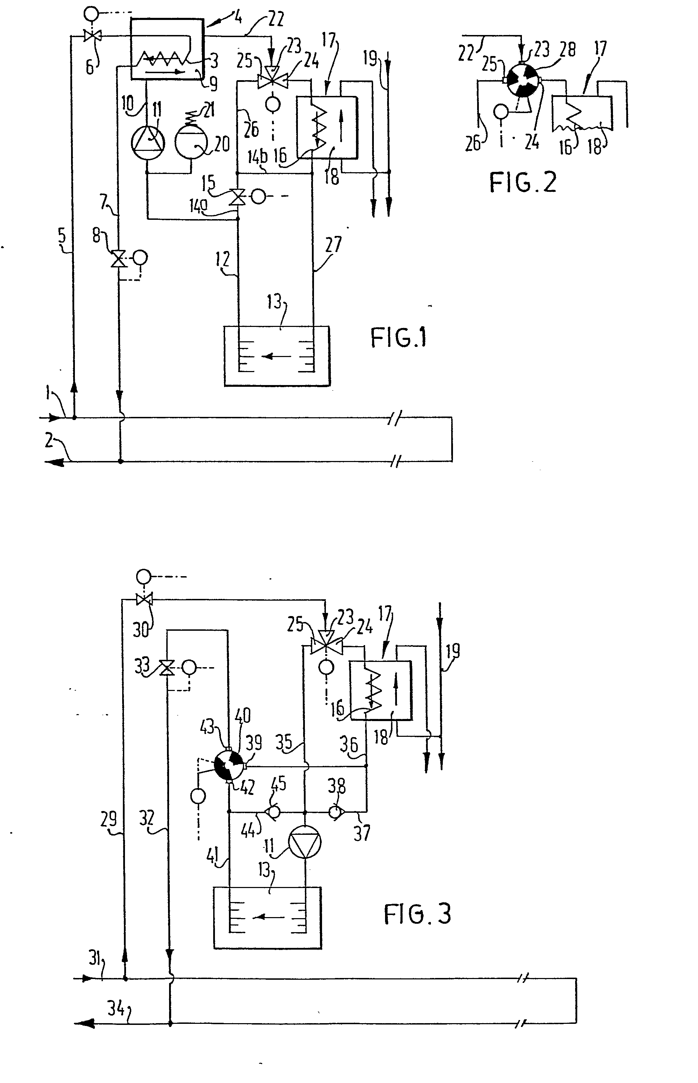

In fig.1 the supply conduit of a ring main connected to a source of heat (not shown) is designated by 1 and the return conduit thereof by 2. In the ring main heating fluid, e.g. water, of high temperatur, for instance higher than $200^{\circ}C$, and high pressure, for instance more than 20 Atmosphere, is circulated. The primary spaces 3 of heat exchangers 4 of individual heat consuming installations are connected in parallel with one another between the supply conduit 1 and the return conduit 2. Each one of said primary spaces 3 is connected through a supply conduit 5 provided with a remote controlled stop cock to the supply conduit 1 and through a return conduit 7 provided with a remote controlled valve 8 to the return conduit 2. The stop cock 6 is closed, when the heat consuming installation does not require heat, that means neither for heating tap-water nor for space heating, but is is opened, as soon as the room thermostat (not shown) gives the signal that heat is wanted for maintaining the temperature in the space(s) to be heated at or for raising said temperature to a given value or for heating tap-water. The valve 8 is a valve with a passage are controlled by the temperature of the heating fluid flowing through the return conduit 7 and it sees to it that said temperature does not exceed a predetermined value. If control of the temperature of the return water is not required the valve may be dispensed with.

Connected to the secondary space 9 of the heat exchanger 4 is a secondary pipe circuit, in which normally water circulates. A circulating pump is located in the supply conduit 10 of the secondary space 9. The suction side of said pump is connected both to the return conduit 12 of the space heating appliances, e.g. radiators 13, and through a shunt conduit 14a, b comprising a stop cock 15 to the outlet end of the primary space 16 of a second heat exchanger 17, of which the secondary space 18 is connected to the tap-water conduit 19. Connected to the suction side of the pump, that means to the return conduit 12, is an expansion tank 20 provided with a safety valve.

The return conduit 22 of the secondary space 9 of the first heat exchanger 4 is connected to the inlet port 23 of a threeway cock. One outlet port 24 of said cock is connected to the inlet end of the primary space 16 of the second heat exchanger 17 for the tap-water heating and the other outlet port 25 thereof is connected through a conduit 26 both to the shunt conduit 14 a provided with the stop cock 15 and through the conduit 14b to the outlet end of the primary space 16 of the heat exchanger 17 and to the supply conduit 27 of the radiators 13.

The threeway cock 23,24,25 is remote controlled. This cock may be so constructed, as to interconnect, for instance in normal circumstances, the outlet port 25 and the inlet port 23, but as soon as the tap-water thermostat requires heat for heating tap-water, to interrupt said interconnection of the ports 23 and 25 and to establish the communication between the ports 23 and 25. The stop cock 15 provided in the shunt conduit 14a is normally open, but it is closed when the room thermostat or a system of this thermostat and an outside thermostat requires heat for space heating. This heat consuming installation has four possibilities:

1. Neither the radiators 13 require, nor the tap-water heating device requires heat. In that case the stop cock 6 remains closed, the threeway cock remains in its position 23, 25 and the stop cock 15 remains open, so that only the pump circuit is closed via 10,9,22,23, 25,26,15,14a,11.

2. Only for space heating heat is wanted. Then the stop cock 6 is opened, the threeway cock remains in its position 23, 25 and the stop cock 15 is closed. In that case the circuit 9,22,23,25,26,14b,27,13,12,11,10,9 is closed, so that heating fluid is led through the radiators only.

3. Only the tap-water heating device requires heat. In that case the stop cock 6 is opened, the threeway cock is put into the position 23,24 and the stop cock 15 remains open, so that the circuit 9,22,23,24,16,14b,a, 15,11,10,9 is closed and heat is supplied through the second heat exchanger 17 to the cold water supplied by the tap-water conduit or to the water contained in the boiler space 18. As the open stop cock 15 shunts nearly without any resistance the radiators 13 for the space heating, there will be hardly any flow of heating fluid (water) through the radiators.

4. Both the radiators 13 and the tap-water contained in the secondary space 18 of the second heat exchanger 17 must be heated. Then the stop cock 6 is opened, the threeway cock is brought into position 23,24 and the stop cock 15 is closed. In that case the circuit 9,22,23,24,16,27,13,12,11,10,9 is closed and the radiators 13 are fed with return water of the primary space 16 of the heat exchanger 17 of the tap-water heating device. During to the fact that the radiators are fed, whilst hot water is tapped, the stabilityt of the space heating is considerably improved.

In order to obtain an adjustable distribution of the heating fluid among the tap-water heating device and the space heating appliances it is advantageous to replace the threeway cock 23,24,25, which can only be changes over, by a threeway cock 28 constructed as a remote controlled gradually reversible reversing valve. This threeway cock 28 is shown in fig.2 and is provided in the place of the threeway cock 23,24,25 of the heat consuming installation illustrated in fig.1. The threeway cock 28 is not only adapted to interconnect either the ports 23 and 24 or the ports 23 and 25 but also to connect both the outlet port 24 with an adjusted passage area and the outlet port 25 with a complementary passage are to the inlet port 23. The position of the threeway cock 28 shown in fig.2 corresponds with the condition, in which the second heat exchanger 17 received all heating fluid coming from the secondary space 9 of the first heat exchanger 4. Should the stop cock 15 be closed the radiators 13 will receive only the return water coming from the primary space 16 of the heat exchanger 17 of the tap-water heating device. However, the threeway cock 28 will be adjusted in accordance with the ratio between the heat quantities required by the space and the tap-water and it will then be so turned to the right as to make the passage rea of the port 24 leading to the tap-water heating device smaller and to enlarge in a complementary way the passage area of the port 25 leading directly to the radiatros 13. In that case the tap-water heating device is supplied with a portion of the current of heating fluid and the radiators 13 receive the return fluid from said device as well as via the port 25 the rest of the current of heating fluid.

Fig.3 shows a heat consuming installation which is directly connected to a ring main including a source of heat (not shown). Heating fluid, mostly hot water of less than 100°C, is circulated in said ring main. This consuming installation is connected through a supply conduit 29 comprising a stop cock 30 directly to the supply conduit of said ring main and by a return conduit 32 comprising a cock 33 directly to the return conduit 34 of the ring main. The stop cock 30 corresponds with the stop cock 6 and the cock 33 corresponds with the cock 8 shown in fig.1.

The supply conduit 29 provided with the stop cock 30 is connected to the inlet port 23 of a threeway cock which can only be reversed. One outlet port 24 of said threeway cock is connected to the primary space 16 of a heat exchanger 17 for heating tap-water and the other outlet port 25 thereof is connected to the supply conduit 35 including a pump 11 and leading to the space heating appliances, e.g. radiators 13. The return conduit 36 of the primary space 16 of the heat exchanger 17 communicates on one hand via a conduit 37 comprising a check valve closing towards said primary space with the supply conduit 35 and the suction side of the pump 11 and on the other hand with an inlet port 39 of a second threeway cock 40. The outlet port 43 of the threeway cock 40 is connected to the return conduit 32 provided with the adjustable valve 33. Furthermore, the series connection of the radiators 13 and the pump 11 is shunted by a conduit 44 comprising a check valve 45 which opens towards the suction side of the pump.

The threeway cock 40 is a remote controlled gradually reversible reversing cock which so operates, as to connect either only the inlet port 39, or only the inlet port 42, or both the port 39 and the port 42 to the outlet port 43, and sees to it that, when the passage area of the port 39 becomes gradually larger.

This installation has five different conditions, viz.:

1. The heat consuming installation does not require heat. Then, the stop cock 30 is closed, the first threeway cock may, according to the selected control, be either in its position of rest 23,24 or in its position of rest 23,25 and also the position of the second threeway cock 40 depends on the chosen controlling system. In that case the pump circuit is short-circuited via the conduit 44 comprising the check valve 45 which may be loaded by a force, which, if desired, is adjustable.

2. Heat is only required for the space heating appliances, that means the radiators 13. In that case the stop cock 30 is openend, the first threeway cock is in its postion 23,25 and the second threeway cock 40 is turned into a position, in which the communication between the ports 42 and 43 is partly or completely open. Then, the heating fluid is supplies from the supply conduit 31 of the ring main through 29,30,23,25,35,11 to the radiators and hence through 41,42,42,33,32 returned to the return conduit 34 of the ring main. The threeway cock 40 controls the flow of heat through the radiators.

3. Only heat is wanted for the tap-water heating device. In that case the stop cock 30 is opened, the first threeway cock is turned into its position 23,24 and the second threeway cock 40 into the position, in which the port 39 is in the most open communication with the port 43 and the port 42 is closed. The heating fluid then follows the circuit 31,29,30,23,24,16,36,39,43,33, 32,34, so that the water contained in the secondary space 18 of the heat exchanger 17 of the tap-water heating device is heated. Said secondary space forms part of the tap-water conduit.

4. Heat is required for both the radiators and the tap-water heating device. In that case the stop cock 30 is opened, the first threeway cock is turned in its position 23,24 and the second threeway cock is turned for instance, in the position, in which the port 39 is entirely closed and the port 42 is fully open. Then, the heating fluid follows the circuit 31,29,30,23,24,16,37, 38,11,13,41,42,43,33,32,,34, so that the tap-water heating device receives all offered heating fluid and the radiators 13 are fed only with return fluid coming from the primary space 16 of said device.

5. Heat is required fro both the radiators 13 and the tap-water heating device. In that case the stop-cock 30 is opened, the first threeway cock is turned into the position 23,24 and the second threeway cock into the position, in which the port 39 is opened with a given passage area and the port 42 is opened with the complementary passage area. The heating fluid passed through the primary space 16 of the heat exchanger 17 then flows partly through ports 39 and 43 of the threeway cock 40 and for the remaining part through the conduit 37 comprising the check valve 38 and through the radiators 13, the conduit 41 and the ports 42 and 43 to the return conduit 32 comprising the valve 33 and hence to the return conduit 34 of the ring main.

It is observed, that the heat consuming installation shown in figs 1 and 2 may also be directly connected to the ring main 1,2. Then the pump 11 will have to be located in the conduit 27, where as the series connection of the pump 11 and the radiators 13 will have to be bridged by a conduit comprising a check valve. Conversely, the installation illustrated in fig.3 may be connected by means of a heat exchanger 4 to a ring main for a heating fluid of very high temperature and pressure. The position of the pump is then determined by the positions of rest of the two threeway cocks.

It will be obvious that in fig.3 the stop cock 30 may be dispenses with, if the threeway cock 23,24,25 is in its position 23,25 when the consuming installation does not require heat. In that case the controllable threeway cock 40 sees to the regulation of the flow of heat through the radiators.

## CLAIMS

1. A district or block heating system comprising a ring main which is connected to a source of heat and in which a heating fluid is circulated, a plurality of individual composite heat consuming installations intended for space heating and tap-water heating, said heat consuming installations being either directly connected to said ring main or being thermally coupled therewith through a heat exchanger, and in at least one of said installations a remote controlled threeway cock which is adapted to connect either the space heating appliances or the primary space of a heat exchanger of a device for heating tap-water directly to said ring main or to the secondary space of the first mentioned heatexchanger, characterized in that in the said heat consuming installation the outlet end of the primary space of the heat exchanger of the tap-water heating device can be connected both directly and through the space heating appliances to a return conduit connected to said ring main or to the secondary space of the first mentioned heat exchanger and means for regulating by the heat consumption the current of the heating fluid flowing respectively, through the installation or through the primary circuit thereof are provided.

2. A district or block heating system according to claim 1, characterized in that the space heating appliances are connected with their inlet ends both to an outlet port of the threeway cock and to the outlet end of the primary space of the heat exchanger of the tap-water heating device as well as through a shunting conduit comprising a stop cock to a return conduit which is connected to the ring main or to the secondary space of the first mentioned heat exchanger and with their outlet ends to said return conduit and the primary space of the heat exchanger of the tap-water heating device is connected with its inlet end to the other outlet port of the threeway cock and with its outlet end both to the inlet ends of the space heating appliances and through said shunting conduit comprising the stop cock to said return conduit.

3. A district or block heating system according to claim 2, <u>characterized in</u> that the threeway cock is a controllable gradually reversible reversing valve which is so constructed as to enable either only its one outlet port or only its other outlet port or both its one outlet port through an opening with adjustable passage area and its other outlet port through an opening with complementary passage area to be brought into communication with the inlet port of said cock.

4. A district or block heating system according to claim 1, <u>characterized in</u> that the space heating appliances are connected with their inlet ends both to an outlet port of the threeway cock and through a conduit provided with a check valve opening towards said inlet ends to the outlet end of the primary space of the heat exchanger of the tap-water heating device and with their outlet ends through a controllable second threeway cock to a return conduit connected to the ring main or to the secondary space of the first mentioned heat exchanger and the primary space of the heat exchanger of the tap-water heating device is connected with its inlet end to the other outlet port of the first threeway cock and with its outlet end both through a conduit provided with a check valve closing towards its outlet end to the inlet ends of the space heating appliances and through the controllable second threeway cock with said return conduit, whereas the second threeway cock is constructed as a controllable gradually reversible reversing valve and is adapted to connect either only the space heating appliances, or only the primary space of the heat exchanger of the tap-water heating device, or both said appliances through an opening with adjustable passage area and the primary space of the last mentioned heat exchanger through an opening with complementary passage area to said return conduit.

FIG.1

FIG.2

FIG.3

## European Patent Office

## EUROPEAN SEARCH REPORT

### DOCUMENTS CONSIDERED TO BE RELEVANT

| Category | Citation of document with indication, where appropriate, of relevant passages | Relevant to claim |
|---|---|---|
| | DE - A - 2 536 529 (BUDERUS)<br><br>* page 2, line 29 - page 3, line 31; figure *<br><br>-- | 1,2 |
| | DE - A - 1 579 926 (JUNKERS)<br><br>* page 4, lines 3-11; page 4, line 24 - page 6, line 24; page 7, line 7 - page 8, line 3; figures 1,3 *<br><br>-- | 1,2 |
| | GB - A - 1 187 601 (JUNKERS)<br><br>* page 2, line 123 - page 3, line 117; figure *<br><br>-- | 1,2 |
| A | GB - A - 1 425 508 (BROSENIUS) | |
| A | DE - A - 2 008 123 (DEUTSCHE BAUAKADEMIE)<br><br>------------ | |

**CLASSIFICATION OF THE APPLICATION (Int. Cl.³)**

F 24 D 3/08
          3/00

**TECHNICAL FIELDS SEARCHED (Int. Cl.³)**

F 24 D

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 21-12-1981 | WEIS |

EPO Form 1503.1  06.78